Europäisches Patentamt

European Patent Office

Office européen des brevets

(19)

(11) Veröffentlichungsnummer : **0 030 998**
**B1**

(12) **EUROPÄISCHE PATENTSCHRIFT**

(45) Veröffentlichungstag der Patentschrift :
30.03.83

(51) Int. Cl.³ : **H 04 B  7/26, H 04 Q  7/00**

(21) Anmeldenummer : **80104960.2**

(22) Anmeldetag : **21.08.80**

(54) **Sprach- und Datenübertragungssystem.**

(30) Priorität : **19.12.79 DE 2951119**

(43) Veröffentlichungstag der Anmeldung :
**01.07.81 Patentblatt 81/26**

(45) Bekanntmachung des Hinweises auf die Patenterteilung : **30.03.83 Patentblatt 83/13**

(84) Benannte Vertragsstaaten :
**AT DE FR IT**

(56) Entgegenhaltungen :
**DE B 2 142 071**
**DE B 2 238 342**
**DE B 2 612 476**
**GB A 1 341 192**

(73) Patentinhaber : **ROBERT BOSCH GMBH**
**Postfach 50**
**D-7000 Stuttgart 1 (DE)**

(72) Erfinder : **Dallmann, Horst**
**Wiersichweg 5**
**D-1000 Berlin 13 (DE)**
Erfinder : **Gätjens, Sigurd, Dipl.Ing.**
**Sandstrasse 30**
**D-1000 Berlin 20 (DE)**

(74) Vertreter : **Schmidt, Hans-Ekhardt**
**Robert Bosch GmbH Geschäftsbereich Elektronik**
**Patent- und Lizenzabteilung Forckenbeckstrasse**
**9-13**
**D-1000 Berlin 33 (DE)**

Sprach- und Datenübertragungssystem

## Stand der Technik

Die Erfindung geht aus von einem Sprach- und Datenübertragungssystem nach der Gattung des Hauptanspruchs.

In räumlich ausgedehnten Funkversorgungsgebieten hängt die Qualität der in einer zentralen Sende- und Empfangsstation — im folgenden Zentralstation genannt — empfangenen Signale von der Geländebeschaffenheit zwischen der sendenden mobilen Funksende- und -empfangsstation und der Zentralstation ab. Am Rande des Funkversorgungsgebietes und in Abschattungsgebieten ist die Empfangsqualität in der Regel sehr schlecht. Abhilfe schafft in diesen Fällen die Anwendung des Diversity-Prinzips, bei welchem das Funkversorgungsgebiet in mehrere Teilgebiete aufgeteilt wird und jedem Teilgebiet ein abgesetztes Funksende- und -empfangsgerät für die in diesem Teilgebiet operierenden mobilen Funksende- und -empfangsstationen zugeordnet ist (BOSCH-Funk, Technische Informationen, Ausgabe 1978).

Jede abgesetzte Funksende- und -empfangsstation ist mit einem Signalweg, das ist entweder eine Drahtverbindung oder eine Richtfunkverbindung, mit der Zentralstation verbunden. Der Funkverkehr zwischen einer mobilen Funksende- und -empfangsstation und der Zentralstation wird über die jeweils nächstgelegene abgesetzte Funksende- und -empfangsstation durchgeführt.

In der Zentralstation befindet sich eine Diversity-Auswahleinrichtung, die alle Signalwege nacheinander automatisch abfragt und den Signalweg mit der besten Empfangsqualität mit einer der Diversity-Auswahleinheit zugeordneten Bedieneinheit verbindet. Die Bedieneinheit umfaßt im wesentlichen Hör- und Sprecheinrichtungen, Ziffernanzeigen und Drucktasten. Verschlechtert sich die Empfangsqualität während der Übertragung über den von der Diversity-Auswahleinheit automatisch ausgewählten Signalweg, weil die mobile Funksende- und -empfangsstation zum Beispiel in ein anderes Teilgebiet gefahren ist, dann wird durch das in gewissen Zeitabständen stattfindende automatische Abfragen der Signalwege der Signalweg mit der nunmehr besten Empfangsqualität ausgewählt.

Es hat sich nun gezeigt, daß bei einer Sprachübertragung die durch das sequentielle Abfragen bedingten Umschaltungen in der Diversity-Auswahleinheit nicht stören, und zwar auch dann nicht, wenn sich durch die Umschaltung auf verschiedene ankommende Verbindungswege Phasensprünge ergeben.

Werden in demselben Funkversorgungsgebiet jedoch neben Sprachsignalen auch Datensignale, vorzugsweise in Form von Datentelegrammen, übertragen, dann ist unter den vorstehend erläuterten Umständen kein einwandfreier Datenempfang mehr möglich.

## Vorteile der Erfindung

Das erfindungsgemäße Sprach- und Datenübertragungssystem mit den kennzeichnenden Merkmalen des Hauptanspruchs hat den Vorteil, daß die Datenübertragung, die in der Regel ohnehin im Vergleich zur Sprachübertragung nur kurze Zeit dauert, nicht durch die abfragebedingten Umschaltungen gestört werden kann.

## Zeichnung

Ein Ausführungsbeispiel der Erfindung ist in der Zeichnung anhand mehrerer Figuren dargestellt und in der nachfolgenden Beschreibung näher erläutert. Die Zeichnung zeigt in

Figur 1 ein Prinzipschaltbild eines erfindungsgemäßen Sprach- und Datenübertragungssystems,

Figur 2 den schematischen Aufbau bekannter Datentelegramme und

Figur 3 ein Prinzipschaltbild einer erfindungsgemäßen Zentralstation.

## Beschreibung der Erfindung

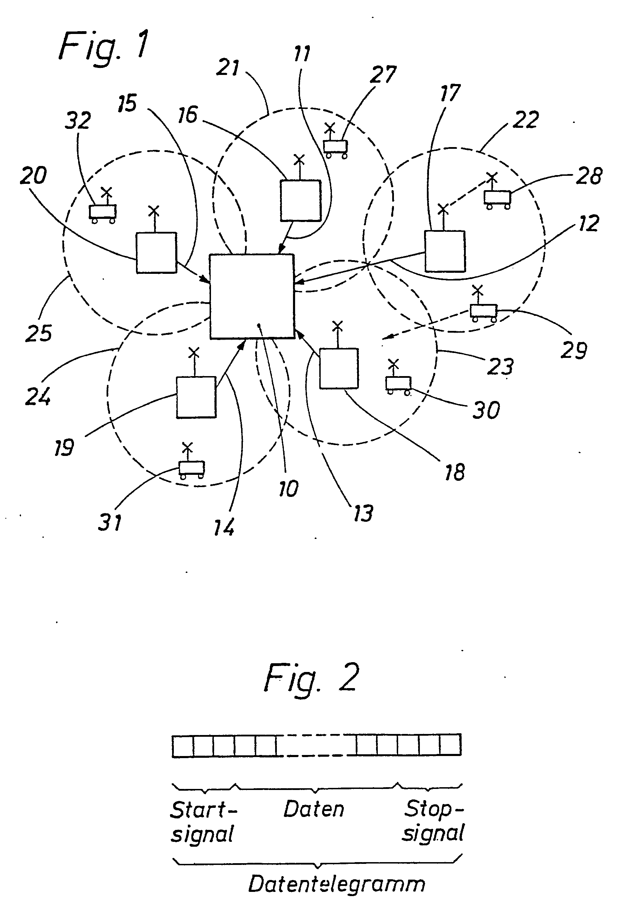

Das erfindungsgemäße Sprach- und Datenübertragungssystem umfaßt nach Fig. 1 eine Zentralstation 10, die über je einen Signalweg 11 ... 15 mit je einer abgesetzten Funksende- und -empfangsstation 16 ... 20 in Verbindung steht. Jede abgesetzte Funksende- und -empfangsstation versorgt ein in Fig. 1 durch gestrichelte Kreise gekennzeichnetes Teilgebiet 21 ... 25 mit mehreren mobilen Funksende- und -empfangsstationen 27 ... 32.

Der Funkverkehr von einer mobilen Funksende- und -empfangsstation, zum Beispiel 29, zu der Zentralstation 10 erfolgt über die dieser Station am nächsten gelegene abgesetzte Funksende- und -empfangsstation 17 des Teilgebiets 22 und über den Signalweg 12.

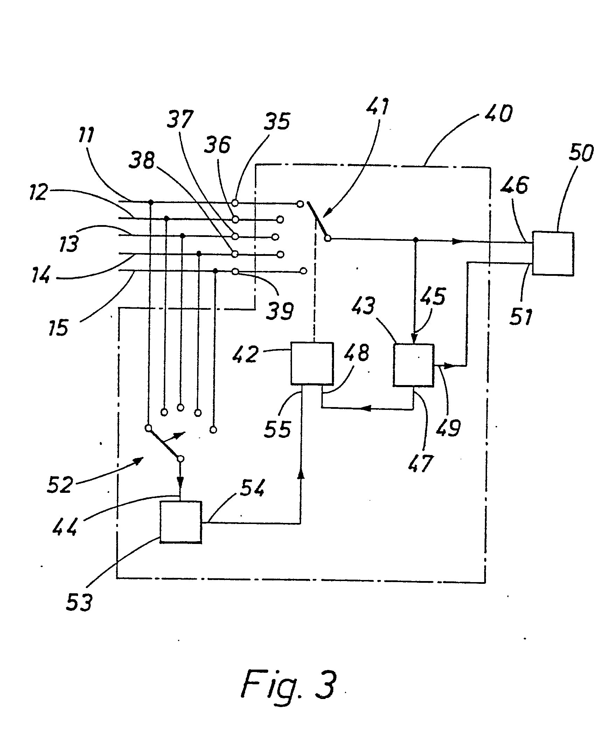

Die Signalwege 11 bis 15, das sind entweder Drahtverbindungen oder Richtfunkverbindungen, sind mit Eingängen 35 ... 39 einer zu der Zentralstation 10 gehörenden Diversity-Auswahleinrichtung 40 verbunden, die dem in Fig. 3 durch strichpunktierte Linien umrahmten Schaltungsteil entspricht. Wesentliche Bestandteile der Diversity-Auswahleinrichtung 40 sind ein erster elektronischer Umschalter 41, ein zweiter elektronischer Umschalter 52, eine Steuerungsschaltung 42, eine Qualitätsvergleichsschaltung 53 und ein Datenauswerter 43 (vgl. dazu auch die GB-A-1 341 192).

Die feststehenden Kontakte des der Übersichtlichkeit halber als mechanischer Schalter dargestellten ersten Umschalters 41 sind mit je einem der Eingänge 35 ... 39 der Diversity-Auswahleinrichtung 40 verbunden. Der bewegliche Teil des ersten Umschalters (41) ist erstens mit einem Eingang 45 des Datenauswerters 43 und zweitens mit einem ersten Eingang 46 einer Bedieneinheit 50 verbunden. Ein erster Ausgang 47 des Datenauswerters 43 steht mit einem ersten Eingang 48 der Steuerungsschaltung 42 und ein zweiter Ausgang 49 mit einem zweiten Eingang 51 der Bedieneinheit 50 in Verbindung.

Die Signalwege 11 ... 15 sind außerdem mit den feststehenden Kontakten des zweiten Umschalters 52 verbunden, dessen beweglicher Kontakt mit einem Eingang 44 einer Qualitätsvergleichsschaltung 53 in Verbindung steht. An einen Ausgang 54 der Qualitätsvergleichsschaltung 53 schließt sich ein zweiter Eingang 55 der Steuerungsschaltung an, die den beweglichen Teil des ersten Umschalters 41 steuert.

Die in Fig. 3 gezeigte Schaltung der Diversity-Auswahleinrichtung 40 hat folgende Funktion :

Die Qualitätsvergleichsschaltung 53 steuert den zweiten Umschalter 52 in gewissen Zeitabständen derart, daß die Signalwege 11 ... 15 nacheinander abgefragt werden ; vgl. Pfeil an dem beweglichen Kontakt des Umschalters 52. In der Qualitätsvergleichsschaltung 53 werden die Empfangsqualitäten der abgefragten Signalwege geprüft. Bei dem Signalweg mit der besten Empfangsqualität gibt die Qualitätsvergleichsschaltung 53 an ihrem Ausgang 54 ein bestimmtes Signal ab, das die Steuerungsschaltung 42 veranlaßt, den ersten Umschalter 41 in eine Schalterstellung zu überführen, die den durch den Empfangsqualitätsvergleich ausgewählten Signalweg mit dem ersten Eingang 46 der Bedieneinheit 50 verbindet.

Die Durchschaltung des jeweils ausgewählten Signalweges bleibt solange erhalten, bis die Qualitätsvergleichsschaltung 53 einen Signalweg mit einer besseren Empfangsqualität feststellt und den Umschalter 41 über die Steuerungsschaltung 42 in die dem besseren Signalweg entsprechende Schalterstellung umschaltet.

Damit der erste Umschalter 41 während einer Datenübertragung nicht umgeschaltet wird, weil sonst die Datenauswertung gestört werden könnte, wird folgende Maßnahme ergriffen.

Ist beispielsweise die mobile Funksende- und -empfangsstation 29 aus dem Teilgebiet 22 (Fig. 1) in das benachbarte Teilgebiet 23 gefahren, dann würde der erste Umschalter 41 seine Schalterstellung wechseln, wenn die Qualitätsvergleichsschaltung 53 einen Signalweg mit besserer Empfangsqualität, zum Beispiel den Signalweg 13, feststellt. Erkennt jedoch der Datenauswerter 43, daß die übertragene Nachricht ein den Beginn eines Datentelegramms (Fig. 2) ankündigendes Startsignal enthält, so gibt der Datenauswerter ein Sperrsignal an seinem ersten Ausgang 47 ab, das dem ersten Eingang 48 der Steuerungsschaltung 42 zugeführt wird. Das Sperrsignal bewirkt, daß der Umschalter 41 in derjenigen Position festgehalten wird, die er zuletzt eingenommen hat. Das Sperrsignal hält nun solange an, bis der Datenauswerter ein Stoppsignal am Ende eines Datentelegramms (Fig. 2) feststellt und die Abgabe des Sperrsignals am Ausgang 47 des Datenauswerters 43 beendet.

## Ansprüche

1. Sprach- und Datenübertragungssystem mit einer zentralen Sende- und Empfangsstation (10), mit mehreren räumlich verteilt angeordneten und über je einen Signalweg (11 ... 15) mit der zentralen Sende- und Empfangsstation verbundenen abgesetzten Funksende- und -empfangsstationen (16 ... 20), mit den abgesetzten Funksende- und -empfangsstationen zugeordneten mobilen Funksende- und -empfangsstationen (27 ... 32) und mit einer zu der zentralen Sende- und Empfangsstation gehörenden Diversity-Auswahleinrichtung (40), die durch automatisches sequentielles Abfragen der einzelnen Signalwege jeweils denjenigen Signalweg feststellt, der die übertragenen Sprach- und Datensignale in bestmöglicher Qualität liefert und diesen Signalweg auf eine Bedieneinheit (50) der zentralen Sende- und Empfangsstation schaltet, dadurch gekennzeichnet, daß der Diversity-Auswahleinrichtung (40) ein Datenauswerter (43) zugeordnet ist, der, wenn er in den Sprach- und Datensignalen ein den Beginn der Datenübertragung kennzeichnendes Startsignal erkennt, ein den durchgeschalteten Signalweg festhaltendes Sperrsignal solange abgibt, bis der Datenauswerter ein das Ende einer Datenübertragung kennzeichnendes Stoppsignal erkennt.

2. Sprach- und Datenübertragungssystem nach Anspruch 1, dadurch gekennzeichnet, daß zwei elektronische Umschalter (41, 52) vorgesehen sind, von denen der zweite Umschalter (52) das automatische, sequentielle Abfragen der Signalwege (11 ... 15) und der erste Umschalter (41) das durch den Vergleich der Empfangsqualitäten gesteuerte Durchschalten des jeweiligen Signalweges (11 ... 15) zur Bedieneinheit (50) übernimmt.

## Claims

1. Voice and data transmission system having a central transmitting and receiving station (10), a plurality of spatially distributed, staggered radio transmitting and receiving stations (16 ... 20) each connected to the central transmitting and receiving stations by way of a respective signal path (11 ... 15), mobile radio transmitting and receiving stations (27 ... 32) associated with the staggered radio transmitting and receiving stations, and a diversity selecting device (40) which forms part of the central transmitting and receiving station and which, by automatic, sequential interrogation of the individual signal paths, in each case establishes that signal path which is supplying the transmitted speech and data signals of the best possible quality and switches this signal path to an operator's unit (50) of the central transmitting and receiving station, characterised in that the diversity selecting device (40) has an associated data evaluator (43) which, when it detects in the voice and data signals a starting signal characterising the commencement of the data transmission, produces a blocking signal, which holds the opened signal path, until the data evaluator detects a stop signal characterising the end of a data transmission.

2. Voice and data transmission system as claimed in claim 1, characterised in that two electronic change-over switches (41, 52) are provided, of which the second change-over switch (52) undertakes the automatic, sequential interrogation of the signal paths (11 ... 15), and of which the first change-over switch (41) undertakes the switching, controlled by the comparison of the reception qualities, of the respective signal path (11 ... 15) to the operator's unit (50).

**Revendications**

1. Système de transmission téléphonique et de transmission de données avec une station centrale d'émission et de réception (10), avec plusieurs stations radio-émettrices et réceptrices écartées (16 à 20) reliées chacune par un parcours de signaux (11 à 15) avec la station centrale d'émission et de réception, avec des stations radio-émettrices et réceptrices mobiles (22 à 32) associées aux stations radio-émettrices et réceptrices écartées, et avec une installation de sélection diversifiée (40) faisant partie de la station centrale d'émission et de réception, et qui en interrogeant automatiquement, de façon séquentielle. les différents parcours de signaux. détermine le parcours de signaux qui délivre selon la meilleure qualité possible les signaux téléphoniques et les signaux de données ainsi transmis, et qui connecte ce parcours de signaux sur une unité de service (50) de la station centrale d'émission et de réception, système caractérisé en ce que, à l'installation de sélection diversifiée (40) est associé un dispositif d'exploitation de données (43) qui, lorsqu'il détecte dans les signaux téléphoniques et les signaux de données, un signal de départ caractérisant le début d'une transmission de données, délivre un signal de blocage maintenant le parcours de signaux ainsi connecté, jusqu'à ce que ce dispositif d'exploitation de données détecte un signal d'arrêt caractérisant la fin d'une transmission de données.

2. Système de transmission téléphonique et de transmission de données selon la revendication 1. caractérisé en ce qu'il est prévu deux commutateurs électroniques (41, 52). le second (52) de ces commutateurs assumant l'interrogation séquentielle automatique des parcours de signaux (11 à 15). tandis que le premier commutateur (41) assume la connexion, commandée par la comparaison des qualités de réception, du parcours de signaux considéré (11 à 15) à l'unité de service (50).

# Fig. 1

# Fig. 2

Start-signal | Daten | Stop-signal

Datentelegramm

Fig. 3